# EUROPEAN PATENT APPLICATION

(11) **EP 4 786 141 A1**
(43) Date of publication of application: **05.08.2026**
(21) Application number: 24872410.6
(22) Date of filing: 26.09.2024
(51) Int. Cl.: B29C 49/80, B29C 49/06

(54) **BLOW MOLDING DEVICE AND BLOW MOLDING METHOD**

(30) Priority: 28.09.2023 JP 2023168722
(71) Applicant: Nissei ASB Machine Co., Ltd., Komoro-shi, Nagano 384-8585 (JP)
(72) Inventor: OGIHARA, Hiroki, Komoro-shi, Nagano 384-8585 (JP); TAKEUCHI, Mikako, Komoro-shi, Nagano 384-8585 (JP); HIDAKA, Yasuhiro, Komoro-shi, Nagano 384-8585 (JP)
(74) Representative: Mewburn Ellis LLP
(86) International application number: PCT/JP2024/034461
(87) International publication number: WO 2025/070625

(57) **Abstract**

A blow molding apparatus of the present invention includes: an injection molding unit that injection-molds a bottomed cylindrical preform; a heating unit that heats the preform having a heat retained during injection molding; a blow molding unit that blow-molds the heated preform; a first conveyance unit that holds the injection-molded preform and conveys the preform via the heating unit; and a second conveyance unit that grips the conveyed preform in an upright state and conveys the preform to the blow molding unit, the blow molding apparatus further including: an inspection unit that captures an image of the preform being conveyed and detects a defect in appearance of the preform based on the obtained image; and a discharge unit that discharges the preform having the defect detected to the outside.

## Description

### Technical Field

The present invention relates to a blow molding apparatus and a blow molding method, and more particularly to a blow molding apparatus and a blow molding method capable of performing an appearance inspection of a preform in the molding apparatus.

### Background Art

In general, as a method for manufacturing a resin container such as a plastic bottle, for example, a method is known in which a resin material as a raw material is injection-molded to form a cylindrical preform, and then the preform is stretched by blow molding to mold the preform into a shape of the container. Here, the injection-molded preform may have a defective appearance such as scratches, sink marks, black spots, bubbles, or foreign matter contamination. When the preform has a defect such as a defective appearance, a container manufactured by blow molding also has a defect and cannot be made into a commercial product. Therefore, it is preferable to perform an inspection at a stage of the preform before performing the blow molding and exclude the preform having the defect from a manufacturing line.

Conventionally, as this type of preform inspection apparatus, there have been proposed a configuration in which a sensor is used to determine whether a diameter of a neck portion of a preform, an upper end surface of the neck portion, and a height of the neck portion are good or bad (see, for example, Patent Literature 1), and a configuration in which two cameras are used to detect a defective appearance in an entire circumference of a side wall of the preform (see, for example, Patent Literature 2).

### Citation List

### Patent Literature

Patent Literature 1: JP H06-6331 B
Patent Literature 2: JP H11-30593 A
Patent Literature 3: JP 5563095 B

### Summary of Invention

### Technical Problem

There are a 1-stage system (or a hot parison system) in which injection molding and blow molding of a preform are performed in a single molding machine to reduce energy loss and a 2-stage system (or a cold parison system) in which an injection molding apparatus and a blow molding apparatus of a preform are separately provided to increase production efficiency as a blow molding apparatus for manufacturing a resin container.

In addition, the present applicant has put into practical use an injection stretch blow molding apparatus called a 1.5-stage system having advantages of both the 1-stage system and the 2-stage system (see, for example, Patent Literature 3). In the 1.5-stage system, while energy loss is reduced by performing blow molding using a heat retained during injection molding, production efficiency is improved by causing the number of preforms processed in a molding cycle of an injection molding unit to be different from the number of preforms processed in a molding cycle of a blow molding unit provided in a single molding machine.

Among the above systems, in the 2-stage system, it is easy to inspect the preform before putting the preform into the blow molding apparatus. On the other hand, in the case of the 1.5-stage system, since injection molding to blow molding are continuously performed in a single molding machine, it was difficult to apply the above-described conventional preform inspection apparatus.

The present invention has been made in view of such a problem, and an object of the present invention is to provide a blow molding apparatus of a 1.5-stage system that can perform an appearance inspection of a preform and efficiently discharge the preform in which a defect is found to the outside.

### Solution to Problem

One aspect of the present invention provides a blow molding apparatus including: an injection molding unit that injection-molds a bottomed cylindrical preform made of a resin; a heating unit that heats the preform having a heat retained during injection molding to a temperature suitable for blow molding; a blow molding unit that blow-molds the heated preform to manufacture a resin container; a first conveyance unit that holds the injection-molded preform and conveys the preform via the heating unit; and a second conveyance unit that grips the conveyed preform in an upright state and conveys the preform to the blow molding unit, the blow molding apparatus further including: an inspection unit that captures an image of the preform being conveyed and detects a defect in appearance of the preform based on the obtained image; and a discharge unit that discharges the preform having the defect detected by the inspection unit to the outside.

### Advantageous Effects of Invention

According to one aspect of the present invention, it is possible to provide a blow molding apparatus of a 1.5-stage system that can perform an appearance inspection of a preform and efficiently discharge the preform in which a defect is found to the outside.

### Brief Description of Drawings

Fig. 1 is a plan view schematically illustrating a configuration of a blow molding apparatus.
Fig. 2 is a diagram schematically illustrating conveyance of preforms in an injection molding unit and a cooling unit.
Fig. 3 is a diagram illustrating an example of a preform.
Fig. 4 is a plan view schematically illustrating a configuration of a first inspection unit that inspects a body portion of a preform.
Fig. 5 is a side view schematically illustrating a configuration of the first inspection unit that inspects a bottom portion of the preform.
Fig. 6 is a side view schematically illustrating a configuration of a second inspection unit that inspects a top surface of a neck portion of the preform.

### Description of Embodiments

Hereinafter, an embodiment of the present invention will be described with reference to the drawings.

In the embodiment, for easy understanding, structures and elements other than a main part of the present invention will be described in a simplified or omitted manner. In the drawings, the same elements are denoted by the same reference numerals. Note that shapes, dimensions, and the like of respective elements illustrated in the drawings are schematically illustrated, and do not indicate actual shapes, dimensions, and the like.

### <Description of Blow Molding Apparatus>

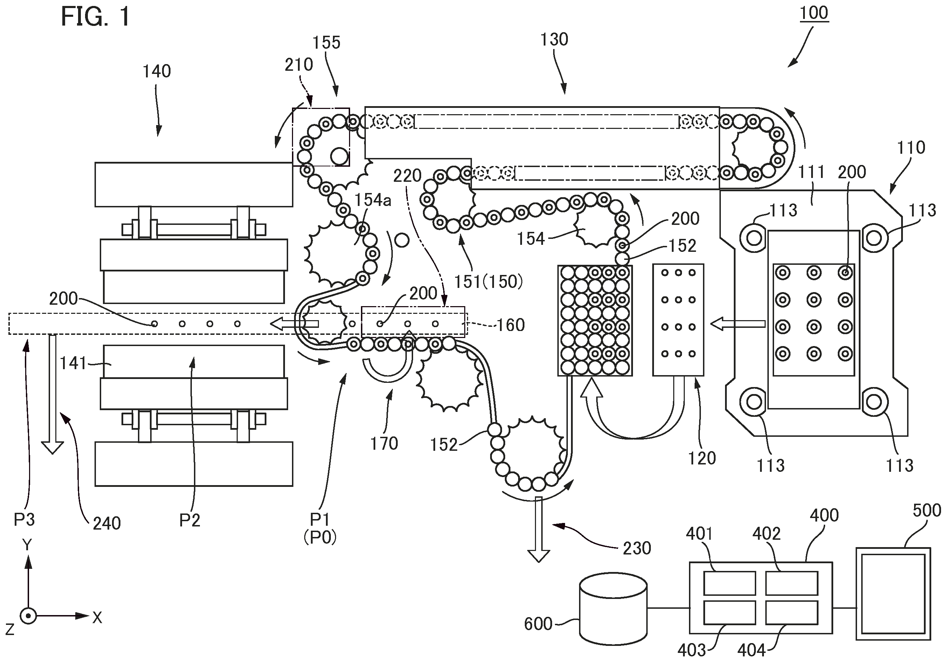

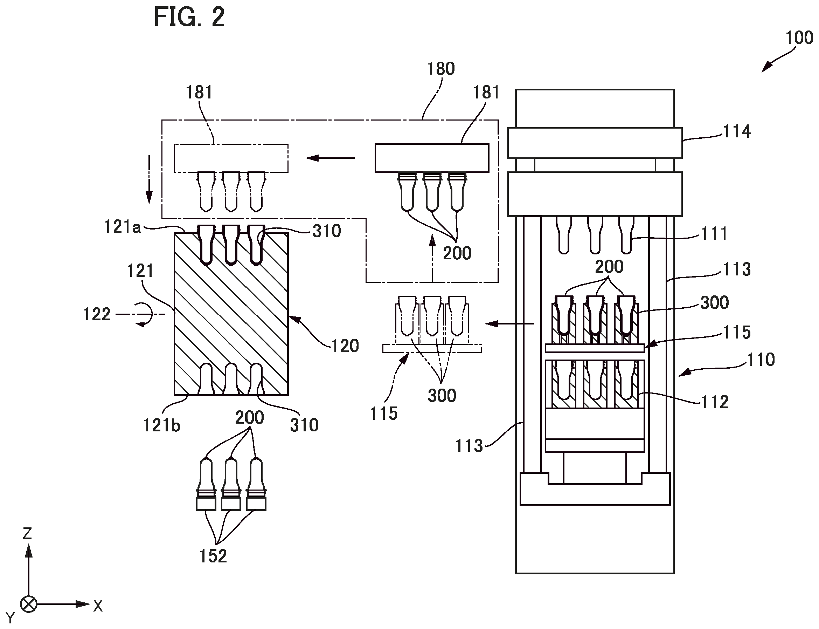

First, a blow molding apparatus 100 according to an embodiment of the present invention will be described with reference to Fig. 1. Fig. 1 is a plan view schematically illustrating a configuration of a blow molding apparatus. Fig. 2 is a diagram schematically illustrating conveyance of preforms in an injection molding unit and a cooling unit.

The blow molding apparatus 100 according to the present embodiment executes a blow molding method called a 1.5-stage system having advantages of both a 1-stage system (hot parison system) and a 2-stage system (cold parison system). In the blow molding method of the 1.5-stage system, a preform having heat during injection molding is basically blow-molded to manufacture a container as in the 1-stage system. However, a cycle of the blow molding in the 1.5-stage system is set to be shorter than a cycle of the injection molding of the preform. In addition, a plurality of preforms molded in one injection molding cycle are blow-molded in a plurality of blow molding cycles.

Although not particularly limited, a ratio (N: M) of the number (N) of preforms to be simultaneously injection-molded and the number (M) of containers to be simultaneously blow-molded is set to, for example, 3:1.

As illustrated in Fig. 1, the blow molding apparatus 100 includes an injection molding unit 110, a cooling unit 120, a heating unit 130, and a blow molding unit 140.

The blow molding apparatus 100 further includes a continuous conveyance unit (first conveyance unit) 150 that conveys a preform 200 unloaded from the cooling unit 120 to the blow molding unit 140 via the heating unit 130.

The continuous conveyance unit 150 is a conveyance device configured to continuously convey a conveyance jig 152 holding the preform 200 in an inverted state along a loop-shaped conveyance line 151 having a plurality of curved portions. That is, the continuous conveyance unit 150 can repeatedly convey each conveyance jig 152 along the loop-shaped conveyance line 151.

The blow molding apparatus 100 further includes a control device 400 that generally controls the operation of the blow molding apparatus 100. The control device 400 is configured as an information processing device such as a microcomputer including a CPU, a RAM, a ROM, an I/O interface, and the like (all of them are not illustrated), and reads and executes a program stored in the RAM or the ROM to implement various functions for control.

The blow molding apparatus 100 further includes a display device 500 that displays a state of the blow molding apparatus 100 or the like to an operator or the like in accordance with a command from the control device 400, and a storage device 600 that stores data regarding the state of the blow molding apparatus 100 or the like.

The injection molding unit 110 injection-molds a bottomed cylindrical preform 200 that is a resin molded article.

As illustrated in Fig. 2, the injection molding unit 110 includes a neck mold (not illustrated) and a core mold 111 disposed above, a cavity mold 112 disposed below, and a clamping mechanism 114 that clamps the neck mold, the core mold 111, and the cavity mold 112 with tie bars 113. The injection molding unit 110 injection-molds the preform 200 by filling an injection space formed by the core mold 111 and the cavity mold 112 with a resin material (raw material) from an injection device (not illustrated).

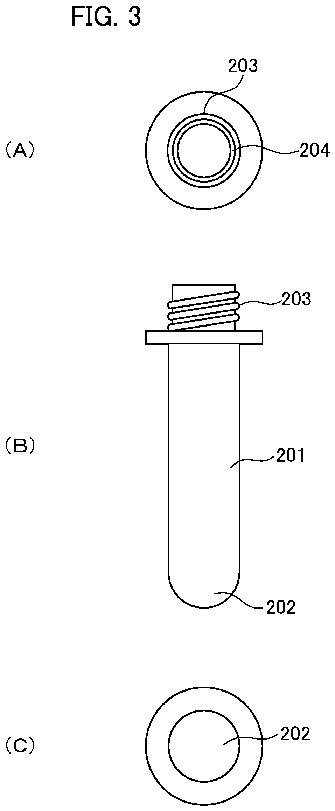

Here, an example of the preform 200 applied in the present embodiment will be described with reference to Fig. 3. Fig. 3(A) is a plan view illustrating a top surface (upper end surface) of a neck portion (opening portion) of the preform 200 in an upright state. Fig. 3(B) is a front view of the preform 200. Fig. 3(C) is a bottom view illustrating a hemispherical bottom portion of the preform 200.

The entire shape of the preform 200 is a bottomed cylindrical shape in which one end side is opened and the other end side is closed. The preform 200 includes a body portion 201 that is formed in a cylindrical shape, a bottom portion 202 that closes the other end side of the body portion 201, and a neck portion 203 that is formed in an opening on one end side of the body portion 201. The neck portion 203 has a circular top surface 204.

The raw material of the preform 200 is a thermoplastic synthetic resin, and can be appropriately selected according to the use of the container. Specific examples of the material include PET (polyethylene terephthalate), PEN (polyethylene naphthalate), PCTA (polycyclohexanedimethylene terephthalate), Tritan (Tritan (registered trademark): co-polyester manufactured by Eastman Chemical Co., Ltd.), PP (polypropylene), PE (polyethylene), PC (polycarbonate), PES (polyethersulfone), PPSU (polyphenylsulfone), PS (polystyrene), COP/COC (cyclic olefin polymer), PMMA (polymethyl methacrylate: acrylic), and PLA (polylactic acid).

The injection molding unit 110 of the present embodiment is configured to simultaneously mold, for example, 3 rows × N' (N' is plural and is four in the case of the example of Fig. 1. N is also plural and is N = 12 in a case of N' = 4) preforms 200. In addition, the preform 200 is molded in an upright state with the neck portion 203 facing upward in the injection molding unit 110, and the preform 200 is conveyed in the upright state in the injection molding unit 110.

As illustrated in Fig. 2, the injection molding unit 110 includes a receiving unit 115 that takes out the injection-molded preform 200 to the outside of the injection molding unit 110. The receiving unit 115 is configured to be movable in a horizontal direction (X direction in the drawing) from a receiving position on the lower side of the core mold 111 to a delivery position outside a space surrounded by the tie bars 113.

The receiving unit 115 holds 12 pots 300 that respectively accommodate 3 rows × 4 preforms 200 molded by the injection molding unit 110. Each pot 300 is an example of a preform holding member and has a accommodation space corresponding to an outer shape of the preform 200.

In addition, the receiving unit 115 includes a mechanism (not illustrated) that adjusts an interval (interval in the X direction in the drawing) of rows of the pots 300 during the movement from the receiving position to the delivery position. As a result, the receiving unit 115 converts an interval of the rows of the preforms 200 from a wide pitch state of the receiving position to a narrow pitch state of the delivery position.

The preform 200 injection-molded by the injection molding unit 110 is supplied from the injection molding unit 110 to the cooling unit 120. The cooling unit 120 forcibly cools the preform 200 molded by the injection molding unit 110. The preform 200 is unloaded from the cooling unit 120 in a state of being cooled to a predetermined temperature, and is continuously conveyed along the conveyance line 151.

Note that the cooling of the preform 200 in the cooling unit 120 is performed for the purpose of eliminating variations in the temperature of each preform 200 after injection molding and conveying the preform to the heating unit 130 in a homogeneous state. That is, the preform 200 does not need to be cooled to the room temperature, and is conveyed to the heating unit 130 in a state of retaining heat at the time of injection molding, so that good energy efficiency similar to that of the 1-stage system can be obtained also in the present embodiment.

As illustrated in Fig. 2, a conveyance device 180 that conveys the preform 200 from the receiving unit 115 to the cooling unit 120 in an upright state is provided between the injection molding unit 110 and the cooling unit 120. The conveyance device 180 includes a holding unit 181 that holds the neck portion 203 of the preform 200 in the upright state, and is configured to be able to move the holding unit 181 in the vertical direction (Z direction in the drawing) and the horizontal direction (X direction in the drawing) by an air cylinder (not illustrated).

As illustrated in Fig. 2, the cooling unit 120 has an inversion unit 121. The inversion unit 121 can be inverted about a shaft 122 extending in the X direction in the drawing as a rotation axis, and is configured to be movable up and down in the Z direction (vertical direction) in the drawing. On a first surface 121a illustrated on the upper side in the drawing of the inversion unit 121 and a second surface 121b facing the first surface 121a, 12 cooling pots 310 are arranged on each surface in order to accommodate 3 rows × 4 preforms 200.

The cooling pot 310 disposed on the first surface 121a and the second surface 121b of the inversion unit 121 is cooled by a refrigerant circulating through a refrigerant passage (not illustrated) provided in the inversion unit 121. The cooling pot 310 of the inversion unit 121 has a function of sucking and holding the accommodated preform 200.

In addition, the inversion unit 121 inverts the preform 200 in the upright state received from the conveyance device 180 to an inverted state in which the neck portion 203 faces downward during a cooling time. Then, the preform 200 in the inverted state is delivered to the conveyance jigs 152 of the continuous conveyance unit 150 arranged in a plurality of rows at a standby position below the cooling unit 120. The conveyance jig 152 holding the preform 200 is sequentially conveyed along the conveyance line 151 by a driving force of a sprocket 154 or the like.

The heating unit 130 heats the preform 200 in the inverted state continuously conveyed by the continuous conveyance unit 150 to an appropriate stretching temperature. The heating unit 130 includes a plurality of heaters (not illustrated) arranged at predetermined intervals along the conveyance line 151 on both sides of the conveyance line 151. In the heating unit 130, the preform 200 in an inverted state is heated while rotating about the axial direction of the preform 200, and the entire preform 200 is uniformly heated.

The blow molding apparatus 100 further includes an intermittent conveyance unit (second conveyance unit) 160 and a delivery unit 170 on the downstream side of the heating unit 130 in the conveyance line 151.

The intermittent conveyance unit 160 grips a plurality of (M, for example, three or four) preforms 200 heated by the heating unit 130 in an upright state and intermittently conveys the preforms to the blow molding unit 140. The delivery unit 170 inverts the preform 200 continuously conveyed in the inverted state along the conveyance line 151 by the continuous conveyance unit 150, and delivers the preform to the intermittent conveyance unit 160 in the upright state.

In the present embodiment, a plurality of (M') conveyance jigs 152 continuous in the conveyance direction are connected by a connecting member (not illustrated) to be unitized (integrated). The plurality (M') indicates a number of M or more, and examples thereof include 8, 9, and 12. When the size of the preform 200 or the container is large (for example, a container having a capacity of 12 liters or more or a preform thereof), the preform 200 may be arranged per 1 to 3 conveyance jigs 152 unitized as described above. The continuous conveyance unit 150 repeats driving and stopping of a sprocket 154a on the conveyance line 151 on the downstream side of a curved conveyance portion 155 curved at a predetermined radius, thereby supplying a plurality of (M, for example, three or four) preforms 200 to the delivery unit 170 at a time.

The delivery unit 170 includes an inversion device (not illustrated) at a delivery position P0. The preform 200 conveyed in the inverted state along the conveyance line 151 is inverted by the inversion device disposed on the upper side of the preform 200 at the delivery position P0 to be in the upright state. In addition, the delivery unit 170 includes, for example, a lifting device (not illustrated) that lifts and lowers the inversion device, and delivers the preform 200 in the upright state to the intermittent conveyance unit 160 in a state of being lifted to a predetermined position (delivery position P1).

The intermittent conveyance unit 160 grips the neck portion 203 of each preform 200 in the upright state by an openable and closable blow conveying chuck member 161 provided in the intermittent conveyance unit 160. The blow conveying chuck member 161 grips the neck portion 203 of the preform 200 at the delivery position P1 located above the delivery position P0, and moves the preform 200 from the delivery position P1 to the blow molding position P2. As a result, the plurality of preforms 200 are conveyed to the blow molding unit 140 at predetermined intervals.

The blow molding unit 140 includes a blow cavity mold 141 that is a pair of split molds corresponding to the shape of the container, and an air introduction member (not illustrated) that also serves as a stretching rod. In the blow molding unit 140, a predetermined number of preforms 200 received by the intermittent conveyance unit 160 from the delivery unit 170 are conveyed to the blow cavity mold 141, and the preforms 200 are subjected to stretch blow molding by the blow cavity mold 141 to manufacture a container.

The container manufactured by the blow molding unit 140 is conveyed to a container taking-out position P3 (taking-out portion) outside the blow molding unit 140 by the intermittent conveyance unit 160.

### <Description of Inspection unit and Discharge unit>

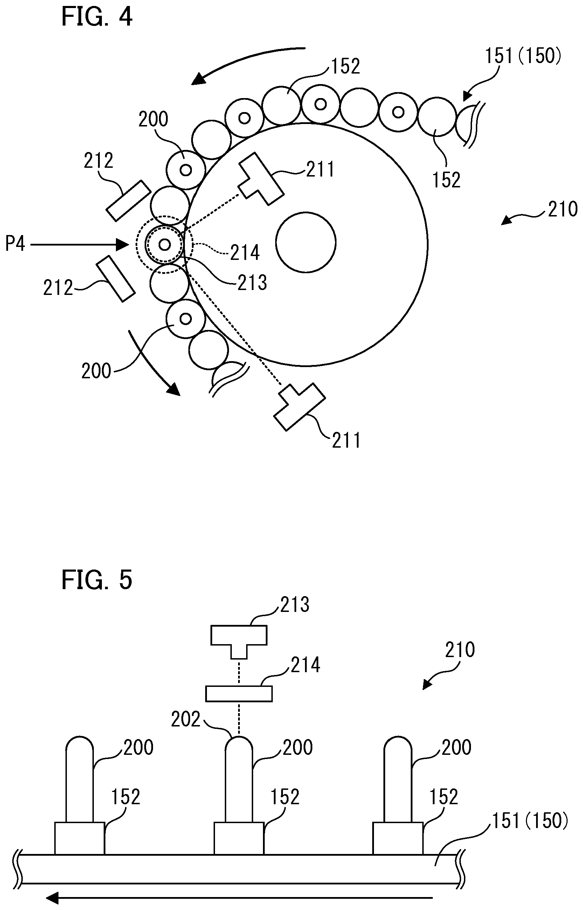

Next, configuration examples of an inspection unit (first inspection unit 210 and second inspection unit 220) and a discharge unit (first discharge unit 230 and second discharge unit 240) in the present embodiment will be described with reference to Figs. 4 to 6. In the present embodiment, the control device 400, the display device 500, and the storage device 600 of the blow molding apparatus 100 function as a part of the inspection unit and the discharge unit.

As will be described later, the inspection unit in the present embodiment captures images of the preform 200 being conveyed, and detects defects in appearance in the body portion 201, the bottom portion 202, and the neck portion 203 of the preform 200 based on the obtained images.

In addition, the discharge unit in the present embodiment efficiently discharges the preform 200 in which a defect in appearance has been detected by the inspection unit to the outside of the blow molding apparatus 100.

A configuration of the first inspection unit 210 according to the present embodiment will be described with reference to Figs. 4 and 5. Fig. 4 is a plan view schematically illustrating a configuration of the first inspection unit 210 that inspects the body portion 201 of the preform 200, and Fig. 5 is a side view schematically illustrating a configuration of the first inspection unit 210 that inspects the bottom portion 202 of the preform 200.

In the present embodiment, the first inspection unit 210 is provided on the downstream side of the heating unit 130 in the continuous conveyance unit 150, that is, in the vicinity of the curved conveyance portion 155.

The first inspection unit 210 includes at least one or more, preferably, two cameras 211 and 211 that capture an image of the body portion 201 of the preform 200 conveyed in the inverted state, and light sources 212 and 212 for the cameras 211 and 211. Further, the first inspection unit 210 includes one camera 213 that captures an image of the bottom portion 202 of the preform 200 conveyed in the inverted state, and a light source 214 for the camera 213.

Further, the first inspection unit 210 includes a first determination unit 401 that determines the presence or absence of a defect in the appearance of the preform 200 based on information of the images captured by the cameras 211 and 211 and the camera 213. Further, the first inspection unit 210 includes a display unit that displays a result of the determination and notifies the operator of the apparatus of the determination result, and a storage unit that stores an image of the preform 200 in which the defect has been detected. In the present embodiment, the display device 500 and the storage device 600 of the blow molding apparatus 100 function as the display unit and the storage unit, respectively.

The cameras 211 and 211 may be any cameras capable of capturing an image of visible light, and a known CCD camera or CMOS camera can be used.

As illustrated in Fig. 4, the cameras 211 and 211 capture an image of the body portion 201 of the preform 200 when the preform 200 conveyed in an inverted state along the conveyance line 151 of the continuous conveyance unit 150 reaches a predetermined position (image capturing position P4). Each of the two cameras 211 and 211 is arranged such that its optical axis forms an angle of approximately 90 degrees on a plane orthogonal to the central axis of the preform 200. As a result, the cameras 211 and 211 can capture an image of the body portion 201 of the preform 200 over substantially the entire circumference.

The light sources 212 and 212 for the cameras 211 and 211 are arranged on opposite sides of the cameras 211 and 211 with the preform 200 interposed therebetween, and illuminate the preform 200 during image capturing by the cameras 211 and 211, thereby enabling capturing of a clear image.

The light sources 212 and 212 for the cameras 211 and 211 may be illumination devices having a sufficient light amount to appropriately capture an image of the preform 200 by the cameras 211 and 211, and are not particularly limited. For example, a planar LED light having approximately the same height and width as the height and width of the preform 200 can be used.

Similarly to the cameras 211 and 211, the camera 213 can be configured by a known camera (CCD camera or CMOS camera) capable of capturing an image of visible light.

As illustrated in Figs. 4 and 5, the camera 213 captures an image of the bottom portion 202 of the preform 200 when the preform 200 conveyed in an inverted state along the conveyance line 151 of the continuous conveyance unit 150 reaches the image capturing position P4. The camera 213 is arranged, for example, at a position directly above the preform 200 at the image capturing position P4 so that an image of the entire bottom portion of the preform 200 can be captured.

The light source 214 for the camera 213 is arranged, for example, directly below or on the lower side of, the camera 213 so as to be able to illuminate the entire bottom portion 202 of the preform 200. In this case, a ring-shaped LED light or the like is used as the light source 214 so that the light source 214 does not enter an angle of view of the camera 213. The light source 214 may be provided at a position where the light source illuminates the bottom portion 202 of the preform 200 at the image capturing position P4 from directly above or from the upper side, and a plurality of light sources 214 may be provided.

The first determination unit 401 is configured as an information processing device such as a microcomputer including a CPU, a RAM, a ROM, an I/O interface, and the like (all of them are not illustrated). In the present embodiment, the control device 400 of the blow molding apparatus 100 functions as the first determination unit 401, and reads and executes a program stored in the RAM or the ROM to implement the function as the first determination unit 401.

The first determination unit 401 receives image data of the preform 200 captured by the cameras 211 and 211 and the camera 213, and determines the presence or absence of a defect in the appearance of the preform 200 using a known algorithm based on the image data. In this determination, for example, image processing such as edge detection is performed on the collected image data, and for example, when there is a detected edge other than the outline of the normal preform 200, it is determined that there is a defect. As a result, the preform 200 having a defect such as black spots, bubbles, or foreign matter contamination in the body portion 201 or the bottom portion 202 is specified.

The determination result by the first determination unit 401 is displayed on the display device 500, so that the operator or the like of the blow molding apparatus 100 can know the inspection result. The display device 500 is, for example, a display device such as a liquid crystal display panel, an organic EL display panel, or an operation screen provided in a part of the blow molding apparatus 100. The display device 500 displays a predetermined screen under the control of the first determination unit 401.

The determination result displayed on the display device 500 can be in the form of a list including, for example, information such as image data captured by the first inspection unit 210, the presence or absence of a defect, identification information of the preform 200, identification information of the conveyance jig 152, the date and time of inspection, and the position and type of the defect.

These pieces of information are stored in the storage device 600. The storage device 600 can be configured by, for example, a storage device such as an HDD or an SSD provided inside the blow molding apparatus 100. The storage device 600 may be provided outside the blow molding apparatus 100.

The preform 200 in which the defect has been detected by the first inspection unit 210 is discharged to the outside by the first discharge unit 230.

The first discharge unit 230 is provided, for example, on the conveyance line 151 on the downstream side of the intermittent conveyance unit 160 and the delivery unit 170, and has a first discharge mechanism for discharging the preform 200 held by the conveyance jig 152 to the outside from a first discharge port (not illustrated).

Further, in the first discharge unit 230, control of the delivery unit 170 and the first discharge mechanism for discharging the preform 200 in which the defect has been detected by the first inspection unit 210 from the first discharge port is performed by a first discharge control unit 402. The first discharge control unit 402 is configured as an information processing device such as a microcomputer including a CPU, a RAM, a ROM, an I/O interface, and the like (all of them are not illustrated). In the present embodiment, the control device 400 of the blow molding apparatus 100 functions as the first discharge control unit 402, and reads and executes a program stored in the RAM or the ROM to implement the function as the first discharge control unit 402.

The first discharge control unit 402 receives information of the preform 200 in which a defect has been detected in the first inspection unit 210 from the first inspection unit 210. When the preform 200 in which the defect has been detected flows through the conveyance line 151 and reaches the delivery position P0, the first discharge control unit 402 controls the delivery unit 170 so that the preform is not delivered to the intermittent conveyance unit 160 by the delivery unit 170. As a result, the preform 200 in which the defect has been detected is left on the conveyance line 151 without being conveyed to the blow molding unit 140. Thereafter, the preform 200 in which the defect has been detected is conveyed to the first discharge unit 230 together with the conveyance jig 152 returned to the standby position below the cooling unit 120. The preform 200 that has reached the first discharge unit 230 is discharged to the outside through the first discharge port by the first discharge mechanism of the first discharge unit 230.

In the present embodiment, in order to avoid complication of the control and mechanism, a predetermined number (M') of preforms 200 held by the coupled conveyance jigs 152 are set as one set, and unloading processing when a defect is detected is executed in units of one set. That is, when a defect is detected in any one of one set (M') of preforms 200 held by the coupled conveyance jigs 152, processing similar to that of the preform 200 in which the defect has been detected is performed on the other preforms 200 included in the one set regardless of the presence or absence of the defect. That is, the one set of preforms 200 is not delivered to the intermittent conveyance unit 160, but conveyed to the first discharge unit 230, and discharged to the outside.

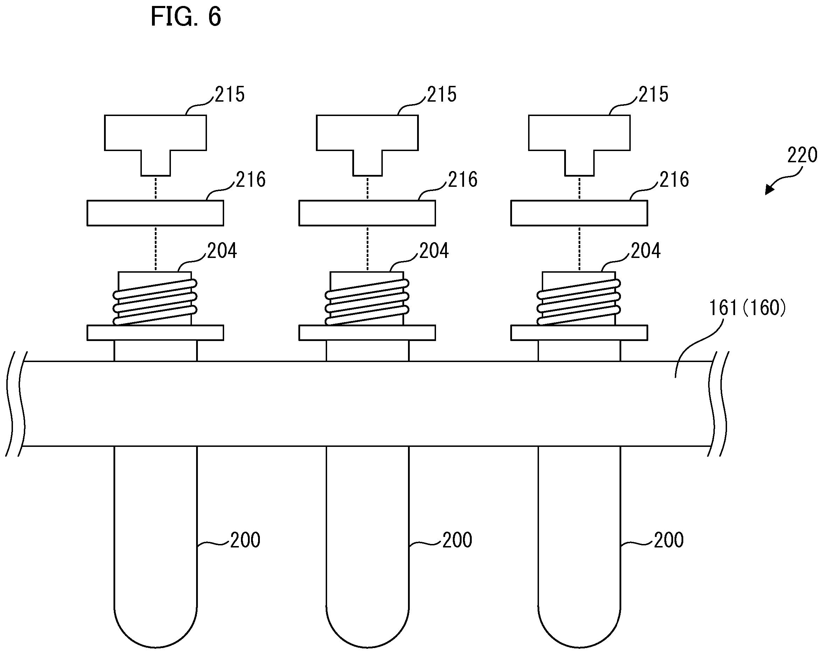

Next, a configuration of the second inspection unit 220 in the present embodiment will be described with reference to Fig. 6. Fig. 6 is a side view schematically illustrating a configuration of the second inspection unit 220 that inspects the top surface 204 of the neck portion 203 of the preform 200.

In the present embodiment, the second inspection unit 220 is provided between the delivery position P1 and the blow molding position P2 in the intermittent conveyance unit 160.

The second inspection unit 220 includes a camera 215 that captures an image of the top surface 204 of the neck portion 203 of the preform 200 conveyed in the upright state, and a light source 216 for the camera 215.

Further, the second inspection unit 220 includes a second determination unit 403 that determines the presence or absence of a defect in the appearance of the preform 200 based on information of the image captured by the camera 215. Further, the second inspection unit 220 includes a display unit that displays a result of the determination and notifies the operator of the apparatus of the determination result, and a storage unit that stores an image of the preform 200 in which the defect has been detected. In the present embodiment, the display device 500 and the storage device 600 of the blow molding apparatus 100 function as the display unit and the storage unit, respectively.

Similarly to the cameras 211 and 211 and the camera 213, the camera 215 can be configured by a known camera capable of capturing an image of visible light.

As illustrated in Fig. 6, the camera 215 is provided above a path for moving the preform 200 in an upright state gripped by the blow conveying chuck member 161 of the intermittent conveyance unit 160 from the delivery position P1 to the blow molding position P2, and captures an image of the top surface 204 of the neck portion 203 of the preform 200 passing directly below the camera.

In the present embodiment, the blow conveying chuck member 161 is configured to grip a plurality of (M) preforms 200 per unit, and accordingly, at least one or more, preferably, M cameras 215 are provided in a frame member (not illustrated) at a position above the blow conveying chuck member 161. In a case where the number of containers to be simultaneously molded is three (M = 3), each of the three (M) cameras 215 is associated with each of the three (M) preforms 200 gripped by the blow conveying chuck member 161, so that it is possible to inspect three (M) preforms 200 at a time, and the time required for the inspection in the second inspection unit 220 is shortened.

Similarly to the light source 214 for the camera 213, the light source 216 for the camera 215 is arranged directly below or on the lower side of, the camera 215, and is configured as a ring-shaped LED light so that the light source 216 does not enter an angle of view of the camera 215. The light source 216 may be provided at a position where the light source illuminates the top surface 204 of the preform 200 from directly above or from the upper side.

Similarly to the first determination unit 401 of the first inspection unit 210, the second determination unit 403 is configured as an information processing device such as a microcomputer including a CPU, a RAM, a ROM, an I/O interface, and the like (all of them are not illustrated). In the present embodiment, the control device 400 of the blow molding apparatus 100 functions as the second determination unit 403, and reads and executes a program stored in the RAM or the ROM to implement the function as the second determination unit 403.

The second determination unit 403 receives image data of the preform 200 captured by the camera 215, and determines the presence or absence of a defect in the appearance of the preform 200 using a known algorithm based on the image data. In this determination, for example, image processing such as edge detection is performed on the collected image data, and for example, when there is a detected edge other than the outline of the normal preform, it is determined that there is a defect. As a result, the preform 200 having a defect such as a scratch or a sink mark on the top surface 204 of the neck portion 203 is specified.

The determination result by the second determination unit 403 is displayed on the display device 500, so that the operator or the like of the blow molding apparatus 100 can know the inspection result. The display device 500 displays a predetermined screen under the control of the second determination unit 403.

Similarly to the determination result in the first inspection unit 210, the determination result displayed on the display device 500 can be in the form of a list including, for example, information such as image data captured by the second inspection unit 220, the presence or absence of a defect, identification information of the preform 200, identification information of the blow conveying chuck member 161, the date and time of inspection, and the position and type of the defect.

These pieces of information are stored in the storage device 600. As described above, the storage device 600 can be configured by, for example, a storage device such as an HDD or an SSD provided inside the blow molding apparatus 100, or may be provided outside the blow molding apparatus 100.

The preform 200 in which the defect has been detected by the second inspection unit 220 is discharged to the outside by the second discharge unit 240.

The second discharge unit 240 is provided, for example, at or near the taking-out position P3 outside the blow molding unit 140 in the intermittent conveyance unit 160, and includes a second discharge mechanism for discharging the preform 200 gripped by the blow conveying chuck member 161 to the outside from a second discharge port (not illustrated).

Further, in the second discharge unit 240, the second discharge control unit 404 controls the blow conveying chuck member 161 and the blow molding unit 140 for discharging the preform 200 in which the defect has been detected by the second inspection unit 220 from the second discharge port. Similarly to the first discharge control unit 402, the second discharge control unit 404 is configured as an information processing device such as a microcomputer including a CPU, a RAM, a ROM, an I/O interface, and the like (all of them are not illustrated). In the present embodiment, the control device 400 of the blow molding apparatus 100 functions as the second discharge control unit 404, and reads and executes a program stored in the RAM or the ROM to implement the function as the second discharge control unit 404.

The second discharge control unit 404 receives information of the preform 200 in which the defect has been detected in the second inspection unit 220, and controls the blow molding unit 140 so that the blow molding is not performed by the blow molding unit 140 when the preform 200 in which the defect has been detected is conveyed to the intermittent conveyance unit 160 and reaches the blow molding position P2. The blow molding unit 140 does not introduce the blow air into the preform 200 in which the defect has been detected by the second inspection unit 220, and suppresses wasteful consumption of the blow air.

As a result, the preform 200 in which the defect has been detected is continuously gripped by the blow conveying chuck member 161 without being molded into the container, and is conveyed to the second discharge unit 240 by the intermittent conveyance unit 160. The preform 200 that has reached the second discharge unit 240 is discharged to the outside through the second discharge port by the second discharge mechanism of the second discharge unit 240.

In the present embodiment, in order to avoid complication of the control and mechanism, a predetermined number (M) of preforms 200 held by the blow conveying chuck member 161 are set as one set, and the unloading processing when a defect is detected is executed in units of one set. That is, when a defect is detected in any one of one set of preforms 200 held by the blow conveying chuck member 161, processing similar to that of the preform 200 in which the defect has been detected is performed on the other preforms 200 included in the one set regardless of the presence or absence of the defect. That is, the one set of preforms 200 is conveyed to the second discharge unit 240 without being blow-molded, and discharged to the outside.

Hereinafter, effects of the present embodiment will be described.

According to the present embodiment, in the blow molding machine 100 that consistently performs injection molding of the preform 200 to blow molding of the container, an image of the preform 200 being conveyed is captured, defects in appearance in the body portion 201, the bottom portion 202, and the neck portion 203 of the preform 200 can be detected based on the obtained image, and the preform 200 in which the defect has been detected can be efficiently discharged to the outside. Therefore, in the blow molding apparatus of the 1.5-stage system, the appearance inspection can be performed on the preform 200 before the blow molding, and the preform 200 having the defect can be discharged to the outside without performing the blow molding. As a result, since a defective product can be found early, it is possible to improve the production efficiency of the container by eliminating waste of machine operation.

Further, since the inspection of the preform 200 is performed by the first inspection unit 210 that inspects the appearance of the body portion 201 and the bottom portion 202 of the preform 200 to be conveyed and the second inspection unit 220 that inspects the appearance of the top surface 204 of the neck portion 203 of the preform 200 to be conveyed in the upright state, the appearance inspection can be efficiently performed according to the conveyance state of the preform 200 even in the blow molding apparatus of the 1.5-stage system in which the inversion operation and the vertical movement of the preform are likely to increase.

Further, the discharge of the preform 200 in which the defect has been detected to the outside is performed by the first discharge unit 230 that discharges the preform 200 in which the defect has been detected by the first inspection unit 210 during the conveyance by the continuous conveyance unit (first conveyance unit) 150 to the outside without delivering the preform to the intermittent conveyance unit (second conveyance unit) 160, and the second discharge unit 240 that discharges the preform 200 in which the defect has been detected by the second inspection unit 220 during the conveyance by the intermittent conveyance unit 160 to the outside without performing the blow molding by the blow molding unit 140. Therefore, waste of machine operation for the preform 200 having the defect can be eliminated, and the preform can be efficiently discharged to the outside.

The present invention is not limited to the above embodiment, and various improvements and design changes may be made without departing from the gist of the present invention.

For example, in the above embodiment, the first inspection unit that performs the appearance inspection of the body portion and the bottom portion of the preform and the second inspection unit that performs the appearance inspection of the top surface of the neck portion of the preform are separately provided. However, it is also possible to provide an inspection unit that collectively performs the appearance inspection of the body portion, the bottom portion, and the top surface of the neck portion of the preform.

In the above embodiment, the first discharge unit that discharges the preform in which the defect has been detected by the first inspection unit to the outside and the second discharge unit that discharges the preform in which the defect has been detected by the second inspection unit to the outside are separately provided. However, it is also possible to provide a discharge unit that collectively discharges the preform in which the defect has been detected by the first inspection unit and the preform in which the defect has been detected by the second inspection unit to the outside.

In the above embodiment, the continuous conveyance unit 150 corresponding to the first conveyance unit receives the preform 200 in the inverted state from the inversion unit 121 of the cooling unit 120, and holds and conveys the preform 200 in the inverted state. However, the present invention is not limited thereto, and the cooling unit may deliver the preform 200 to the continuous conveyance unit in the upright state, and the continuous conveyance unit may hold and convey the preform 200 in the upright state.

In this case, the camera 213 and the light source 214 of the first inspection unit 210 that captures an image of the bottom portion 202 of the preform 200 can be arranged upward, for example, at a position directly below or on the lower side of, the preform 200 at the image capturing position P4 in Fig. 4 so that an image of the entire bottom portion of the preform 200 conveyed in the upright state can be captured.

Alternatively, a mechanism may be provided for vertically inverting the preform 200 conveyed in the upright state by the continuous conveyance unit 150 before the first inspection unit 210 and allowing the preform to pass through the first inspection unit 210 in the inverted state.

In addition, the embodiments disclosed herein are to be considered in all respects as illustrative and not restrictive. The scope of the present invention is indicated not by the above description but by the claims, and it is intended that meanings equivalent to the claims and all modifications within the scope are included.

### Reference Signs List

- 100: blow molding apparatus
- 110: injection molding unit
- 120: cooling unit
- 130: heating unit
- 140: blow molding unit
- 150: continuous conveyance unit (first conveyance unit)
- 160: intermittent conveyance unit (second conveyance unit)
- 161: blow conveying chuck member
- 200: preform
- 201: body portion
- 202: bottom portion
- 203: neck portion
- 204: top surface
- 210: first inspection unit
- 220: second inspection unit
- 230: first discharge unit
- 240: second discharge unit
- 400: control device
- 401: first determination unit
- 402: first discharge control unit
- 403: second determination unit
- 404: second discharge control unit
- 500: display device
- 600: storage device

## Claims

1. A blow molding apparatus comprising:
an injection molding unit that injection-molds a bottomed cylindrical preform made of a resin;
a heating unit that heats the preform having a heat retained during injection molding to a temperature suitable for blow molding;
a blow molding unit that blow-molds the heated preform to manufacture a resin container;
a first conveyance unit that holds the injection-molded preform and conveys the preform via the heating unit; and
a second conveyance unit that grips the conveyed preform in an upright state and conveys the preform to the blow molding unit, the blow molding apparatus further comprising:
an inspection unit that captures an image of the preform being conveyed and detects a defect in appearance of the preform based on the obtained image; and
a discharge unit that discharges the preform having the defect detected by the inspection unit to the outside.

2. The blow molding apparatus according to claim 1, wherein
the inspection unit includes:
a first inspection unit that captures an image of a body portion and/or a bottom portion of the preform conveyed by the first conveyance unit, and detects a defect in appearance of the preform based on the obtained image; and
a second inspection unit that captures an image of a top surface of a neck portion of the preform conveyed by the second conveyance unit in an upright state, and detects a defect in appearance of the preform based on the obtained image.

3. The blow molding apparatus according to claim 2, wherein
the discharge unit includes:
a first discharge unit that discharges the preform having the defect detected by the first inspection unit to the outside without being conveyed by the second conveyance unit; and
a second discharge unit that discharges the preform having the defect detected by the second inspection unit to the outside without performing blow molding in the blow molding unit.

4. A blow molding method comprising:
an injection molding step of injection-molding a bottomed cylindrical preform made of a resin;
a heating step of heating the preform having a heat retained during injection molding to a temperature suitable for blow molding;
a blow molding step of blow-molding the heated preform to manufacture a resin container;
a first conveyance step of holding the injection-molded preform and conveying the preform while going through the heating step; and
a second conveyance step of receiving the conveyed preform, gripping the preform in an upright state, and conveying the preform for the blow molding step, the blow molding method further comprising:
an inspection step of capturing an image of the preform being conveyed and detecting a defect in appearance of the preform based on the obtained image; and
a discharging step of discharging the preform having the defect detected in the inspection step to the outside.
